# EUROPEAN PATENT APPLICATION

(11) **EP 2 397 980 A1**
(43) Date of publication of application: **21.12.2011**
(21) Application number: 11170123.1
(22) Date of filing: 16.06.2011
(51) Int. Cl.: G06Q 10/00, G06F 17/30

(54) **Content collecting apparatus, content collecting method, and computer-readable recording medium encoded with content collecting program**

(30) Priority: 18.06.2010 JP 2010139336
(71) Applicant: Konica Minolta Business Technologies, Inc., Chiyoda-ku Tokyo 100-0005 (JP)
(72) Inventor: Teramoto, Keisuke, Tokyo, 100-0005 (JP); Morikawa, Takeshi, Tokyo, 100-0005 (JP); Yamada, Masami, Tokyo, 100-0005 (JP); Ohshima, Atsushi, Tokyo, 100-0005 (JP); Torigoshi, Akihiro, Tokyo, 100-0005 (JP)
(74) Representative: HOFFMANN EITLE

(57) **Abstract**

A content collecting apparatus, capable of accessing a plurality of electronic communities which each exchange contents among users via a network, includes a content accepting portion to accept a content input by a user as a question content, a selecting portion to select at least one of the electronic communities for posting the question content thereon, a posting portion to post the question content on the selected electronic community, and an evaluating portion to evaluate the electronic community on which the question content was posted, on the basis of an answer content posted in correspondence with the question content on that electronic community. The selecting portion, on the basis of the evaluation result by the evaluating portion, selects a second electronic community from among the plurality of electronic communities that is different from the first electronic community on which the question content was posted.

## Description

### BACKGROUND OF THE INVENTION

### Field of the Invention

The present invention relates to a content collecting apparatus, a content collecting method, and a computer-readable recording medium encoded with a computer collecting program. More particularly, the present invention relates to a content collecting apparatus, a content collecting method, and a computer-readable recording medium encoded with a content collecting program which collect contents from an electronic community that exchanges contents among a plurality of users via a network.

### Description of the Related Art

With the recent proliferation of the Internet, there are electronic communities, so-called electronic bulletin boards, in which documents are exchanged among a plurality of users. In an electronic bulletin board, an unspecified number of people are able to post documents. Although this allows opinions of a great number of people to be collected, it requires a user to browse all of a large number of posted documents. As a technique for solving such a problem, for example, Japanese Patent Laid-Open No. 2003-108278 discloses a document displaying system which displays at least part of a plurality of documents having a certain relationship with one another on a screen in a browsable manner. The document displaying system includes: document group extracting means for extracting a group of documents from a plurality of documents; important sentence extracting means for extracting, from each document belonging to the group of documents, a sentence having a certain correlation with the document as an important sentence, in consideration of contents represented by the whole documents belonging to the group of documents; and important sentence displaying means for displaying the important sentences extracted by the important sentence extracting means, on the screen, as part of the documents belonging to the group of documents.

In an electronic bulletin board, however, after a first document is posted, a document the content of which is irrelevant to the content of the initially posted document may be posted. The conventional document displaying systems would not be able to address such cases, thereby requiring a user to browse even those documents having irrelevant contents. Further, there are a lot of electronic bulletin boards on the Internet, making it difficult to select one of the electronic bulletin boards on which it is expected that appropriate documents will be posted.

### SUMMARY OF THE INVENTION

The present invention is made to solve the aforementioned problem, and an object of the present invention is to provide a content collecting apparatus capable of collecting an appropriate answer content from among a plurality of electronic communities.

Another object of the present invention is provide a content collecting method capable of collecting an appropriate answer content from among a plurality of electronic communities.

A further object of the present invention is to provide a computer-readable recording medium encoded with content collecting program capable of collecting an appropriate answer content from among a plurality of electronic communities.

In order to achieve the above-described objects, according to an aspect of the present invention, there is provided a content collecting apparatus capable of accessing a plurality of electronic communities which each exchange contents among a plurality of users via a network, the content collecting apparatus including: a content accepting means for accepting as a question content a content input by a user; a selecting means for selecting from among the plurality of electronic communities at least one electronic community for posting the question content; a posting means for posting the question content on the selected electronic community; and an evaluating means for evaluating the electronic community on which the question content has been posted, on the basis of an answer content posted in correspondence with the question content on the electronic community on which the question content was posted, wherein the selecting means for selecting a second electronic community different from a first electronic community on which the question content was posted, from among the plurality of electronic communities, on the basis of the evaluation result by the evaluating means.

According to this aspect, until an appropriate answer content is acquired, electric communities for posting a question content are selected one by one from among the plurality of electronic communities. Therefore, it is unnecessary for a user to perform an operation of selecting an electronic community for posting the question content from among the plurality of electronic bulletin boards. As a result, this allows providing a content collecting apparatus capable of collecting an appropriate answer content from among the plurality of electronic communities.

Preferably, an evaluating means determines, in the case where each of successive two or more answer contents among a plurality of answer contents posted in correspondence with the question content includes a same word, the selected electronic community is inappropriate.

Preferably, the evaluating means determines, in the case where each of successive two or more answer contents among a plurality of answer contents posted in correspondence with the question content includes only a sentence which is shorter than a prescribed length, the selected electronic community is inappropriate.

Preferable, the evaluating means determines, in the case where no answer content is posted in correspondence with the question content before the time elapsed from when the question content was posted exceeds a prescribed time, or in the case where a frequency of update per prescribed unit of time calculated from the number of posted answer contents and the elapsed time is a prescribed value or less, the selected electronic community is inappropriate.

According to this aspect, the time taken for acquiring an appropriate answer content can be made as short as possible.

Preferably, each of a plurality of electronic communities is assigned to one or more of a plurality of categories, the selecting portion includes a first category selecting means which selects at least one category selected by a user from among a plurality of categories, and the selecting means selects at least one electronic community from among the one or more electronic communities assigned to the category selected by the first category selecting means.

According to this aspect, the question content is posted on one of a plurality of electronic communities that is included in the category selected by the user, and this can increase the probability that an appropriate answer content can be acquired early.

Preferably, each of a plurality of electronic communities is assigned to one or more of a plurality of categories, the selecting means includes a first dividing means which divides the question content into one or more first character strings, and a second category selecting means which selects at least one of a plurality of categories on the basis of one or more first character strings, and the selecting means selects at least one electronic community from among the one or more electronic communities assigned to the category selected by the second category selecting means.

According to this aspect, a category is selected on the basis of the character strings included in the question content, thus allowing an electronic community related to the question content to be selected.

Preferably, each of a plurality of electronic communities is assigned to one or more of a plurality of categories. Said selecting means includes a second dividing means which divides the answer content into one or more second character strings, and a third category selecting means which selects at least one of a plurality of categories on the basis of one or more second character strings, and the selecting means selects at least one electronic community from among the one or more electronic communities assigned to the category selected by the third category selecting means.

According to this aspect, a category is selected on the basis of the character strings included in the answer content, thus allowing an electronic bulletin board related to the answer content to be selected.

Preferably, in the case where a second electronic community is selected by the selecting means, the posting means posts at least one of answer contents which have been posted on the first electronic community, together with the question content, on the second electronic community.

According to this aspect, when the question content is posted on a plurality of electronic communities, the appropriate answer contents that were obtained in the electronic communities on which the question content was posted in the past can be continuously seen in the electronic community on which the question content was posted lately.

Preferably, an adding means to add a new electronic community to a plurality of electronic communities is further included.

Preferably, a Web server function is further included.

According to another aspect of the present invention, there is provided a content collecting method performed in a content collecting apparatus, the content collecting apparatus being capable of accessing a plurality of electronic communities which each exchange contents among a plurality of users via a network, the content collecting method including: a step of accepting as a question content a content input by a user; a step of selecting from among the plurality of electronic communities at least one electronic community for posting the question content; a step of posting the question content on the selected electronic community; and a step of evaluating the selected electronic community on which the question content was posted, on the basis of an answer content posted in correspondence with the question content on the selected electronic community, wherein the selecting step includes a step of selecting, from among the plurality of electronic communities, a second electronic community different from a first electronic community on which the question content was posted, on the basis of the evaluation result in the evaluating step.

According to this aspect, a content collecting method capable of collecting an appropriate answer content from among a plurality of electronic communities can be provided.

Preferably, the evaluating step includes a step of determining the selected electronic community to be inappropriate in the case where each of successive two or more answer contents among a plurality of answer contents posted in correspondence with the question content includes a same word.

Preferably, the evaluating step includes a step of determining the selected electronic community to be inappropriate in the case where each of successive two or more answer contents among a plurality of answer contents posted in correspondence with the question content includes only a sentence which is shorter than a prescribed length.

Preferably, the evaluating step includes a step of determining the selected electronic community to be inappropriate in the case where no answer content is posted in correspondence with the question content before the time elapsed from when the question content was posted exceeds a prescribed time, or in the case where a frequency of update per prescribed unit of time calculated from the number of posted answer contents and the elapsed time is a prescribed value or less.

According to this aspect, the time taken for acquiring an appropriate answer content can be made as short as possible.

Preferably, each of a plurality of electronic communities is assigned to one or more of a plurality of categories, and the community selecting step includes a first category selecting step of selecting at least one category selected by a user from among a plurality of categories, and a step of selecting at least one electronic community from among the one or more electronic communities assigned to the category selected in the first category selecting step.

According to this aspect, the question content is posted on one of a plurality of electronic communities that is included in the category selected by the user, and this can increase the probability that an appropriate answer content can be acquired early.

Preferably, each of a plurality of electronic communities is assigned to one or more of a plurality of categories, and the community selecting step includes a first dividing step of dividing the question content into one or more first character strings, a second category selecting step of selecting at least one of a plurality of categories on the basis of the one or more first character strings, and a step of selecting at least one electronic community from among the one or more electronic communities assigned to the category selected in the second category selecting step.

According to this aspect, a category is selected on the basis of the character strings included in the question content, thus allowing an electronic community related to the question content to be selected.

Preferably, each of a plurality of electronic communities is assigned to one or more of a plurality of categories, and the community selecting step includes a second dividing step of dividing the answer content into one or more second character strings, a third category selecting step of selecting at least one of a plurality of categories on the basis of one or more second character strings, and a step of selecting at least one electronic community from among the one or more electronic communities assigned to the category selected in the third category selecting step.

According to this aspect, a category is selected on the basis of the character strings included in the answer content, thus allowing an electronic bulletin board related to the answer content to be selected.

Preferably, the posting step includes a step of, in the case where the second electronic community is selected in the selecting step, posting at least one of answer contents which have been posted on the first electronic community, together with the question content, on the second electronic community.

According to this aspect, when the question content is posted on a plurality of electronic communities, the appropriate answer contents that were obtained in the electronic communities on which the question content was posted in the past can be continuously seen in the electronic community on which the question content was posted lately.

Preferably, an adding step of adding a new electronic community to the plurality of electronic communities is further included.

Preferably, a Web server function is further included.

According to yet another aspect of the present invention, there is provided a computer-readable recording medium encoded with a content collecting program performed by a computer controlling a content collecting apparatus, the content collecting apparatus being capable of accessing a plurality of electronic communities which each exchange contents among a plurality of users via a network, the content collecting program causing the computer to execute processing including: a step of accepting as a question content a content input by a user; a step of selecting from among the plurality of electronic communities at least one electronic community for posting the question content; a step of posting the question content on the selected electronic community; and a step of evaluating the selected electronic community on which the question content was posted, on the basis of an answer content posted in correspondence with the question content on the selected electronic community, wherein the selecting step includes a step of selecting, from among the plurality of electronic communities, a second electronic community different from a first electronic community on which the question content was posted, on the basis of the evaluation result in the evaluating step.

According to this aspect, a computer-readable recording medium encoded with a content collecting program capable of collecting an appropriate answer content from among a plurality of electronic communities can be provided.

Preferably, the evaluating step includes a step of determining the selected electronic community to be inappropriate in the case where each of successive two or more answer contents among a plurality of answer contents posted in correspondence with the question content includes a same word.

Preferably, the evaluating step includes a step of determining the selected electronic community to be inappropriate in the case where each of successive two or more answer contents among a plurality of answer contents posted in correspondence with the question content includes only a sentence which is shorter than a prescribed length.

Preferably, the evaluating step includes a step of determining the selected electronic community to be inappropriate in the case where no answer content is posted in correspondence with the question content before the time elapsed from when the question content was posted exceeds a prescribed time, or in the case where a frequency of update per prescribed unit of time calculated from the number of posted answer contents and the elapsed time is a prescribed value or less.

According to this aspect, the time taken for acquiring an appropriate answer content can be made as short as possible.

Preferably, each of a plurality of electronic communities is assigned to one or more of a plurality of categories, and the community selecting step includes a first category selecting step of selecting at least one category selected by a user from among a plurality of categories, and a step of selecting at least one electronic community from among the one or more electronic communities assigned to the category selected in the first category selecting step.

According to this aspect, the question content is posted on one of a plurality of electronic communities that is included in the category selected by the user, and this can increase the probability that an appropriate answer content can be acquired early.

Preferably, each of a plurality of electronic communities is assigned to one or more of a plurality of categories, and the community selecting step includes a first dividing step of dividing the question content into one or more first character strings, a second category selecting step of selecting at least one of a plurality of categories on the basis of the one or more first character strings, and a step of selecting at least one electronic community from among the one or more electronic communities assigned to the category selected in the second category selecting step.

According to this aspect, a category is selected on the basis of the character strings included in the question content, thus allowing an electronic community related to the question content to be selected.

Preferably, each of a plurality of electronic communities is assigned to one or more of a plurality of categories, and the community selecting step includes a second dividing step of dividing the answer content into one or more second character strings, a third category selecting step of selecting at least one of a plurality of categories on the basis of one or more second character strings, and a step of selecting at least one electronic community from among the one or more electronic communities assigned to the category selected in the third category selecting step.

According to this aspect, a category is selected on the basis of the character strings included in the answer content, thus allowing an electronic bulletin board related to the answer content to be selected.

Preferably, the posting step includes a step of, in the case where the second electronic community is selected in the selecting step, posting at least one of answer contents which have been posted on the first electronic community, together with the question content, on the second electronic community.

According to this aspect, when the question content is posted on a plurality of electronic communities, the appropriate answer contents that were obtained in the electronic communities on which the question content was posted in the past can be continuously seen in the electronic community on which the question content was posted lately.

Preferably, an adding step of adding a new electronic community to the plurality of electronic communities is further included.

Preferably, a Web server function is further included.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 schematically shows a content collecting system according to an embodiment of the present invention;
Fig. 2 is a block diagram showing an example of the hardware configuration of a MFP;
Fig. 3 is a block diagram showing an example of the functions of a CPU included in the MFP, together with data stored in an EEPROM;
Fig. 4 shows an example of a question entry screen;
Fig. 5 shows an example of a cloud management table;
Fig. 6 is a first diagram showing an example of an answer display screen;
Fig. 7 is a second diagram showing an example of the answer display screen;
Fig. 8 is a third diagram showing an example of the answer display screen;
Fig. 9 is a flowchart illustrating an example of the flow of a content collecting process;
Fig. 10 is a flowchart illustrating an example of the flow of a first electronic community selecting process;
Fig. 11 is a flowchart illustrating an example of the flow of a monitoring process; and
Fig. 12 is a flowchart illustrating an example of the flow of a second electronic community selecting process.

### DESCRIPTION OF THE PREFERRED EMBODIMENTS

The preferred embodiments of the present invention will be described below in conjunction with the drawings. In the following description, the same or corresponding parts are denoted by the same reference characters. Their names and functions are also the same. Thus, a detailed description thereof will not be repeated.

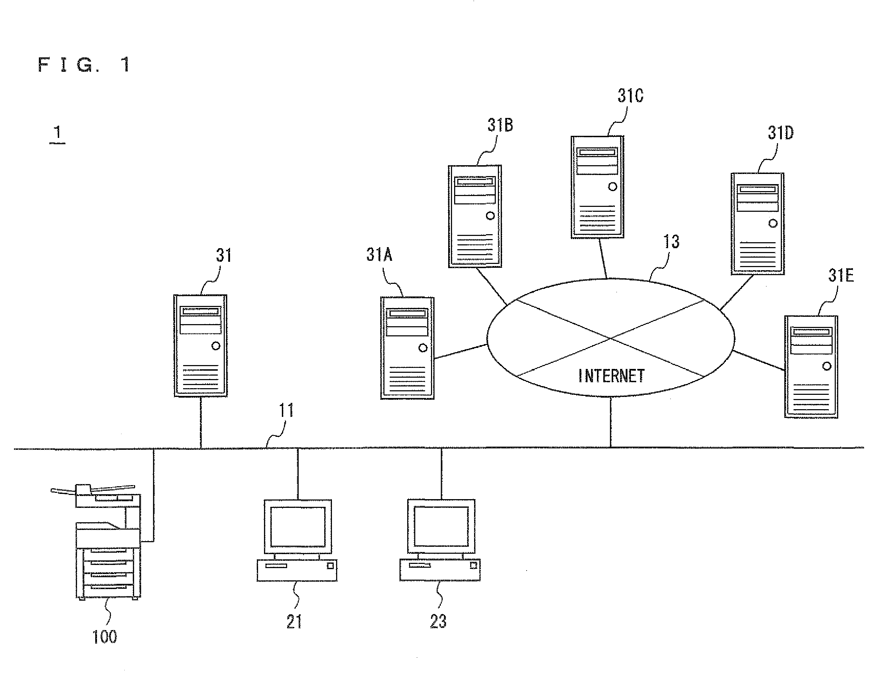

Fig. 1 schematically shows a content collecting system according to an embodiment of the present invention. Referring to Fig. 1, a content collecting system 1 includes a multi-function peripheral (hereinafter, referred to as "MFP") 100, personal computers (hereinafter, referred to as "PCs") 21 and 23, and a server 31, which are each connected to a network 11, and servers 31A to 31E which are each connected to the Internet 13.

Network 11 is a local area network (LAN), which may be connected in a wired or wireless manner. Network 11 is not necessarily the LAN; it may be a wide area network (WAN), the Internet, a general public network, or the like. Network 11 is connected via a gateway to the Internet 13.

MFP 100, which is an example of a content collecting apparatus, functions as a Web server. Servers 31 and 31A to 31E are general computers with well-known hardware configurations and functions, and therefore, description thereof will not be provided here. Servers 31 and 31A to 31E function as Web servers and have electronic communities. Here, an electronic bulletin board will be described as an example of the electronic community.

PCs 21 and 23 are general computers with well-known hardware configurations and functions, and therefore, description thereof will not be provided here. Each of PCs 21 and 23 has a browsing program installed therein and is able to communicate with MFP 100, server 31, and servers 31A to 31E which function as Web servers.

Each of servers 31 and 31A to 31E provides an electronic bulletin board service. Specifically, each of servers 31 and 31A to 31E provides an environment where users of a plurality of computers which are each connected to the Internet 13 are able to browse a common document, and provides an environment where each of a plurality of users is able to release a document. For example, when a user A who operates PC 21 which is executing a browsing program sets a document A containing a question on server 31 in a manner available to the public, any other users, e.g. a user B who operates PC 23, can browse document A released by user A. Further, when user B sets a document B which is related to the content of document A, for example which contains an answer to the question included in document A, on server 31 in a manner available to the public, user A is able to browse document B released by user B. It is noted that each of documents A and B here is not restricted to a file, and may contain text data or image data.

While it is assumed in the present embodiment that servers 31 and 31A to 31E each have a single electronic community, each of servers 31 and 31A to 31E may have a plurality of electronic communities. Further, computers which use the electronic bulletin board services provided thereby are not restricted to PCs 21 and 23, and may be any computer connected to network 11 or the Internet 13, as long as it can access servers 31 and 31A to 31E.

In the content collecting system of the present embodiment, MFP 100 functions as the content collecting apparatus. MFP 100 functions as a Web server for PCs 21 and 23 which each execute a browsing program, while it also functions as a client for servers 31 and 31A to 31E which each function as a Web server. Specifically, MFP 100 is configured such that it provides a content collecting service to PCs 21 and 23, while it, in place of PCs 21 and 22, uses the electronic bulletin board services provided by servers 31 and 31A to 31E. The content collecting service provided by MFP 100 uses an electronic bulletin board service provided by each of servers 31 and 31A to 31E to collect contents, and provides the collected contents to PCs 21 and 23. Processes performed by MFP 100 will now be described in detail.

While one MFP 100, two PCs 21 and 23, and six servers 31 and 31A to 31E are shown in Fig. 1, the numbers of MFPs, PCs, and servers are not limited thereto; at least one MFP, at least one PC, and at least one server may be connected to network 11 or the Internet 13.

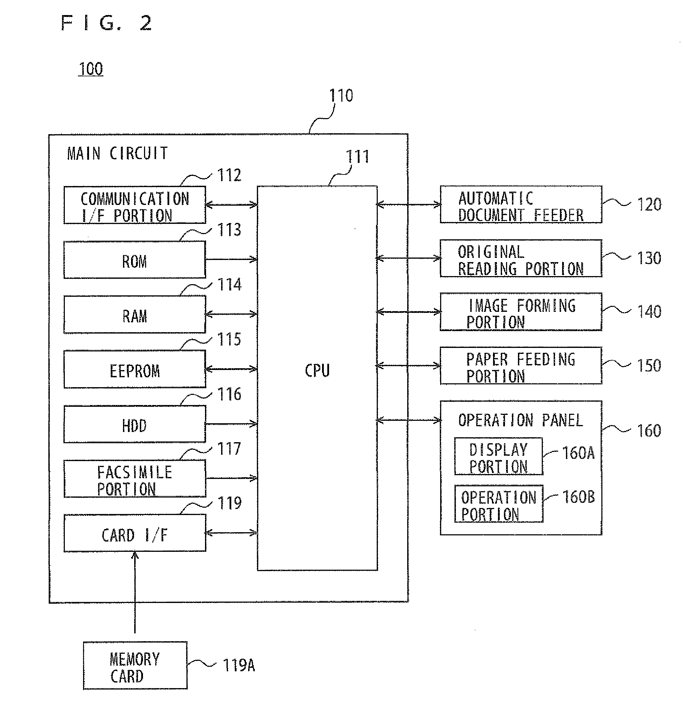

Fig. 2 is a block diagram showing an example of the hardware configuration of the MFP. Referring to Fig. 2, MFP 100 includes: a main circuit 110; an original reading portion 130 which reads an original; an automatic document feeder 120 which carries an original into original reading portion 130; an image forming portion 140 which forms, on a sheet of paper or the like, a still image which is output from original reading portion 130 that has read the image from an original; a paper feeding portion 150 which supplies a sheet of paper to image forming portion 140; and an operation panel 160 serving as a user interface.

Main circuit 110 includes a central processing unit (CPU) 111, a communication interface (I/F) portion 112, a read only memory (ROM) 113, a random access memory (RAM) 114, an electrically erasable and programmable ROM (EEPROM) 115, a hard disk drive (HDD) 116 as a mass storage, a facsimile portion 117, and a card interface (I/F) 119 to which a memory card 119A is mounted.

CPU 111 is connected with automatic document feeder 120, original reading portion 130, image forming portion 140, paper feeding portion 150, and operation panel 160, and is responsible for overall control of MFP 100. ROM 113 stores a program executed by CPU 111 as well as data necessary for execution of the program. RAM 114 is used as a work area when CPU 111 executes a program. Further, RAM 114 temporarily stores still images continuously transmitted from original reading portion 130.

Operation panel 160, which is provided on an upper surface of MFP 100, includes a display portion 160A and an operation portion 160B. Display portion 160A is a display such as a liquid crystal display (LCD) or an organic electro-luminescence display (ELD), and displays an instruction menu for a user, information about acquired image data, and others. Operation portion 160B, which is provided with a plurality of keys, accepts input data such as instructions, characters, and numerical characters, according to the key operations by the user. Operation portion 160B further includes a touch panel provided on display portion 160A.

Communication I/F portion 112 is an interface for connecting MFP 100 to network 11. CPU 111 communicates with each of PCs 21 and 23, and server 31 via communication I/F portion 112, for transmission/reception of data. Further, communication I/F portion 112 communicates with each of servers 31A to 31E connected to the Internet via network 11, for transmission/reception of data.

Facsimile portion 117 is connected to public switched telephone networks (PSTN), and transmits facsimile data to or receives facsimile data from the PSTN. Facsimile portion 117 stores the received facsimile data in HDD 116, or outputs it to image forming portion 140. Image forming portion 140 prints the facsimile data received by facsimile portion 117 on a sheet of paper. Further, facsimile portion 117 converts the data stored in HDD 116 to facsimile data, and transmits it to a facsimile machine connected to the PSTN.

Card I/F 119 is mounted with memory card 119A. CPU 111 is capable of accessing memory card 119A via card I/F 119. CPU 111 loads a program recorded on memory card 119A mounted to card I/F 119, to RAM 114 for execution. It is noted that the program executed by CPU 111 is not restricted to the program recorded on memory card 119A. CPU 111 may load a program stored in HDD 116, to RAM 114 for execution. In this case, another computer connected to network 11 may rewrite the program stored in HDD 116 of MFP 100, or may additionally write a new program therein. Further, MFP 100 may download a program from another computer connected to network 11, and store the program in HDD 116. As used herein, the "program" includes, not only the program which CPU 111 can execute directly, but also a source program, a compressed program, an encrypted program, and others.

It is noted that the medium for storing the program to be executed by CPU 111 is not restricted to memory card 119A. It may be an optical disc (compact disc-ROM (CD-ROM), magneto-optical (MO) disc, mini disc (MD), digital versatile disc (DVD)), an IC card, an optical card, a mask ROM, an erasable programmable ROM (EPROM), an electrically erasable and programmable ROM (EEPROM), or the like.

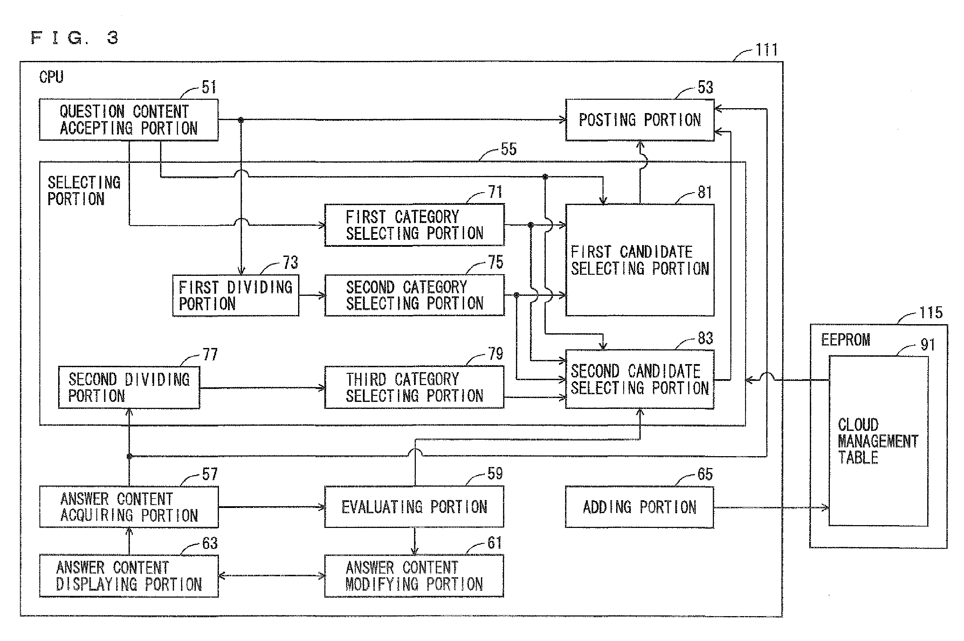

Fig. 3 is a block diagram showing an example of the functions of the CPU included in the MFP, together with data stored in the EEPROM. The functions shown in Fig. 3 are implemented as CPU 111 included in MFP 100 executes the content collecting program stored in ROM 113, EEPROM 115, HDD 116, or memory card 119A. It is here assumed that a user who operates PC 21 accesses MFP 100 to use the content providing service.

Referring to Fig. 3, CPU 111 includes: a question content accepting portion 51 which accepts a question content; a selecting portion 55 which selects one of a plurality of electronic bulletin board services for posting a question content thereon; a posting portion 53 which posts a question content on the selected electronic bulletin board service; an answer content acquiring portion 57 which acquires an answer content; an evaluating portion 59 which evaluates the answer content; an answer content modifying portion 61 which modifies the answer content; an answer content displaying portion 63 which displays the answer content; and an adding portion 65.

Selecting portion 55 includes a first category selecting portion 71, a first dividing portion 73, a second category selecting portion 75, a second dividing portion 77, a third category selecting portion 79, a first candidate selecting portion 81, and a second candidate selecting portion 83.

When communication I/F portion 112 receives from PC 21 a command requesting posting, question content accepting portion 51 transmits a Web page containing a question entry screen, via communication I/F portion 112, to PC 21 which transmitted the request. When PC 21 receives the Web page containing the question entry screen, it displays the question entry screen on a display. It is noted that question content accepting portion 51 transmits a login screen to PC 21 and authenticates a user who operates PC 21 using a user ID and a password input into PC 21 by the user, before transmitting the question entry screen. Therefore, MFP 100 assumes any data received from PC 21, to which question content accepting portion 51 has transmitted the question entry screen after the user authentication, as data input by the authenticated user.

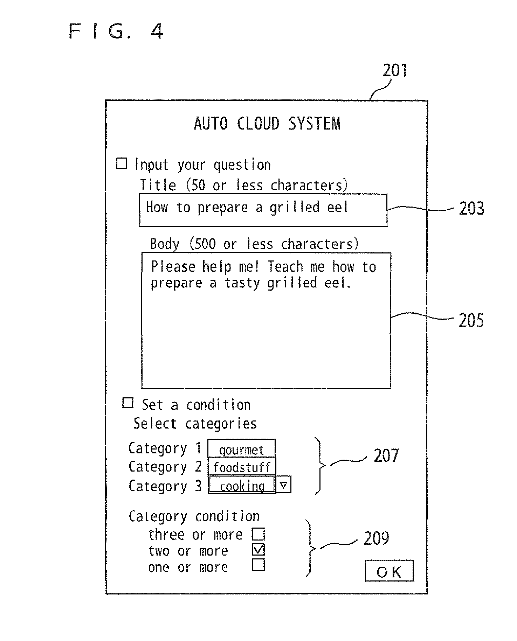

Fig. 4 shows an example of the question entry screen. Referring to Fig. 4, a question entry screen 201 includes an area 203 into which a title is input, an area 205 into which a question body is input, an area 207 in which a category is selected, and an area 209 in which a category condition is set. When a user who operates PC 21 inputs into area 203 a title for a thread to be created in the electronic bulletin board, PC 21 transmits the text of the input title to MFP 100. When the user operating PC 21 inputs into area 205 a question to be posted on the electronic bulletin board, PC 21 transmits the text of the input question to MFP 100.

In area 207, categories in "category 1", "category 2", and "category 3" are each selectable from a pull-down menu. Categories do not necessarily have to be selected for all of "category 1", "category 2", and "category 3"; at least one category may be selected. When the user operating PC 21 selects in area 207 at least one category into which an electronic bulletin board is classified, PC 21 transmits the at least one category thus selected, to MFP 100.

Further, area 209 is the area in which a category condition is selected. Specifically, the condition as to how many of the one or more categories selected in area 207 should be used for determining an electronic community is determined in this area. Area 209 includes a "three or more" checkbox, a "two or more" checkbox, and a "one or more" checkbox. When the "three or more" checkbox is designated, the condition for selecting an electronic community is set such that: the electronic community should be classified into all of the categories selected respectively in "category 1", "category 2", and "category 3" in area 207. When the "two or more" checkbox is designated, the condition for selecting an electronic community is set such that: the electronic community should be classified into two or more of the categories selected respectively in "category 1", "category 2", and "category 3" in area 207. When the "one or more" checkbox is designated, the condition for selecting an electronic community is set such that: the electronic community should be classified into one or more of the categories selected respectively in "category 1", "category 2", and "category 3" in area 207. When the user operating PC 21 selects a condition for selecting the categories in area 209, PC 21 transmits the selected category condition to MFP 100.

In question entry screen 201, while it is surely required that a question is input into area 205, the title, categories, and category condition do not necessarily have to be input, i.e., they may be input optionally.

Returning to Fig. 3, when question content accepting portion 51 receives the text of a question, one or more categories, and a category condition from PC 21 to which it transmitted question entry screen 201, question content accepting portion 51 outputs the received question text to posting portion 53 and first dividing portion 73, outputs the received categories to first category selecting portion 71, and outputs the received category condition to first candidate selecting portion 81 and second candidate selecting portion 83.

When first category selecting portion 71 receives one or more categories from question content accepting portion 51, it refers to a cloud management table 91, which is stored in advance in EEPROM 115, to extract one or more category records in which the one or more categories that have been received are respectively set in the "category" fields, and outputs the extracted one or more category records to first candidate selecting portion 81 or second candidate selecting portion 83. When first category selecting portion 71 does not receive any categories from question content accepting portion 51, it outputs nothing to first candidate selecting portion 81 or second candidate selecting portion 83.

When first dividing portion 73 receives the text of the question from question content accepting portion 51, it divides the input question text into one or more words, and outputs the obtained words to second category selecting portion 75.

Second category selecting portion 75 uses the one or more words received from first dividing portion 73 as keywords to search cloud management table 91 stored in EEPROM 115 to extract one or more category records therefrom. It searches the "keyword" fields in the category records. Second category selecting portion 75 outputs the extracted one or more category records to first candidate selecting portion 81 or second candidate selecting portion 83.

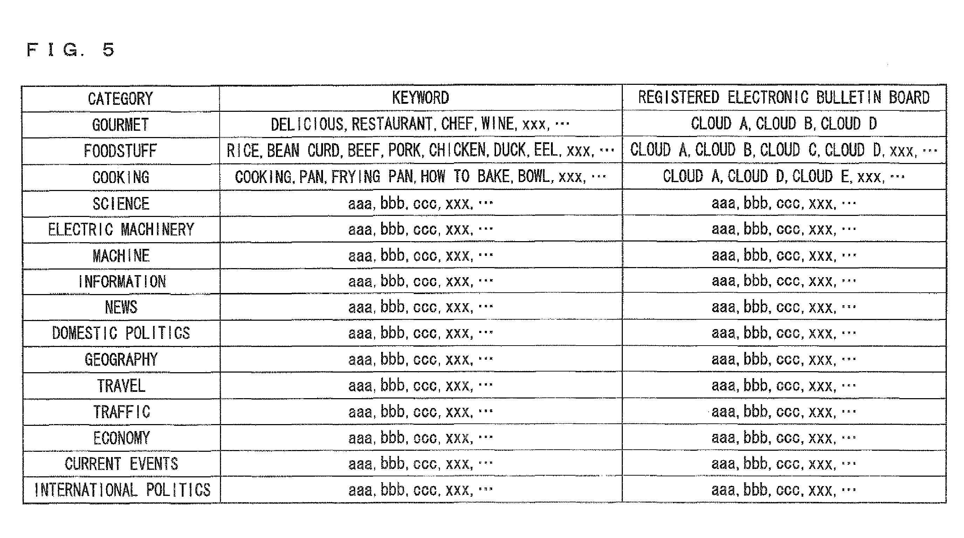

Fig. 5 shows an example of the cloud management table. Referring to Fig. 5, the cloud management table includes one or more category records, each including the fields of "category", "keyword", and "registered electronic bulletin board". The "category" field is for classifying a plurality of electronic bulletin boards, and includes "gourmet", "foodstuff', "cooking", and the like. A keyword is a word related to a category. For example, "delicious", "restaurant", "chef", "wine", and the like are the keywords corresponding to the category "gourmet". In the "registered electronic bulletin board" field, one or more names for respectively identifying one or more of a plurality of electronic bulletin boards that are classified into the category set in the "category" field are set. For example, in the category record having "gourmet" set in the "category" field, "cloud A", "cloud B", and "cloud D" are set in the "registered electronic bulletin board" field. One electronic bulletin board may be classified into a plurality of categories. For example, the electronic bulletin board identified by the name "cloud A" is classified into three categories of "gourmet", "foodstuff", and "cooking".

Returning to Fig. 3, adding portion 65 adds a new category record to cloud management table 91. For example, adding portion 65 accepts a category, a keyword, and a name of an electronic bulletin board that an administrator who manages MFP 100 has input by operating operation portion 160B, generates a new category record, and adds it to cloud management table 91. Further, adding portion 65 accepts a name of a new electronic bulletin board as well as a uniform resource locator (URL) that has been assigned thereto in advance, and stores data in which they are associated with each other in EEPROM 115 as well.

First candidate selecting portion 81 receives the category condition from question content accepting portion 51, and receives one or more category records from first category selecting portion 71 or second category selecting portion 75. First candidate selecting portion 81 may or may not receive one or more category records from first category selecting portion 71. When a user selects a category and sets a category condition in question entry screen 201, one or more category records are input from first category selecting portion 71.

When first candidate selecting portion 81 receives one or more category records from first category selecting portion 71, it extracts, from among the names of the electronic bulletin boards which are set in the "registered electronic bulletin board" fields in the received category records, a name that matches the category condition input from question content accepting portion 51. First candidate selecting portion 81 outputs the extracted electronic bulletin board name to posting portion 53.

A category is selected in accordance with the character string(s) included in the question content, allowing an electronic bulletin board that relates to the question content to be selected.

In the case where the category condition is "three or more", first candidate selecting portion 81 selects a name that is set in the "registered electronic bulletin board" fields in three or more category records out of the one or more category records received from first category selecting portion 71 or second category selecting portion 75. In the case where the category condition is "two or more", first candidate selecting portion 81 selects a name that is set in the "registered electronic bulletin board" fields in two or more category records out of the one or more category records received from first category selecting portion 71 or second category selecting portion 75. In the case where the category condition is "one or more", first candidate selecting portion 81 selects a name that is set in the "registered electronic bulletin board" fields in one or more category records out of the one or more category records received from first category selecting portion 71 or second category selecting portion 75. In the case where names of two or more electronic bulletin boards are selected, first candidate selecting portion 81 may select any one of the selected names.

In the case where no category record is received from first category selecting portion 71, first candidate selecting portion 81 extracts, from among the names set in the "registered electronic bulletin board" fields in one or more category records received from second category selecting portion 75, a name that is set in the largest number of category records. For example, assume that four category records are input from second category selecting portion 75, with a name A set in three category records, a name B set in two category records, and each of names C, D, and E set in one category record. In this case, first candidate selecting portion 81 extracts name A. First candidate selecting portion 81 outputs the extracted electronic bulletin board name to posting portion 53.

In the case where a user designates a category, an electronic bulletin board for posting a question content thereon is selected from among the electronic communities included in the designated category. This enables selection of an electronic bulletin board with high probability of acquiring an appropriate answer content. Further, the number of candidate electronic bulletin boards is decreased, so that the time taken for acquiring an appropriate answer content can be made as short as possible.

Posting portion 53 receives the text of the question from question content accepting portion 51, and receives the name of the electronic bulletin board from first candidate selecting portion 81. Posting portion 53 is connected via communication I/F portion 112 to the electronic bulletin board which is specified by the electronic bulletin board name received from first candidate selecting portion 81, and posts thereon the text of the question received from question content accepting portion 51. It is here assumed that the name of the electronic bulletin board provided in server 31A is received from first candidate selecting portion 81. In this case, posting portion 53 receives a Web page of the electronic bulletin board provided in server 31A by accessing server 31A using a URL which has been predetermined for the electronic bulletin board provided in server 31A. Posting portion 53 analyzes the received Web page, and transmits the text of the question received from question content accepting portion 51 to server 31A, for posting a question. When a question is posted, server 31A generates a new thread in the electronic bulletin board to accept, from any user, any answer to the posted question.

Answer content acquiring portion 57 and evaluating portion 59 monitor the electronic bulletin board on which posting portion 53 has posted the question at prescribed time intervals. Specifically, answer content acquiring portion 57 acquires an answer by accessing the electronic bulletin board, on which posting portion 53 has posted the question, at prescribed time intervals after the question was posted by posting portion 53. Answer content acquiring portion 57 outputs the text of the acquired answer to evaluating portion 59, second dividing portion 77, and posting portion 53. Further, when answer content acquiring portion 57 receives an acquire instruction from answer content displaying portion 63, as will be described later, answer content acquiring portion 57 acquires an answer by accessing the electronic bulletin board on which posting portion 53 has posted the question, and outputs the text of the acquired answer to evaluating portion 59.

When evaluating portion 59 receives an answer from answer content acquiring portion 57, it evaluates the received answer content. Evaluating portion 59 detects the presence or absence of an answer content posted after the question was posted. In the case where no answer content is posted before a lapse of a prescribed time after the question was posted, evaluating portion 59 sets the evaluation result to "update going bad". Further, even in the case where an answer content is posted within the prescribed time after the posting of the question, if the frequency of update of the answer content is a prescribed threshold value or less, then evaluating portion 59 sets the evaluation result to "update going bad". In the case where an answer content is posted before a lapse of the prescribed time after the posting of the question and if the frequency of update of the answer content is greater than the prescribed threshold value, then evaluating portion 59 sets the evaluation result to "update going good".

Here, the frequency is calculated on the basis of the time elapsed from when a question content was posted and the number of answer contents acquired. For example, the frequency may be obtained by dividing the number of acquired answer contents by the time elapsed from when the question content was posted, which corresponds to the number of answer contents posted per unit of time. It is noted that, in place of such evaluation based on the update frequency, evaluating portion 59 may determine as "update going bad" in the case where time longer than a predetermined period has passed from when the last answer content was posted. Still alternatively, evaluating portion 59 may determine as "update going bad" in the case where the time obtained by dividing the time elapsed from when the question content was posted by the number of posted answer contents, i.e., the time interval at which answer contents are posted, is longer than a predetermined period.

By evaluating the electronic bulletin board in which the answer content is not updated as "update going bad", the question content can be posted on a next electronic bulletin board. This can shorten as much as possible the time required until an appropriate answer content is acquired.

Further, when an answer content is posted, evaluating portion 59 analyzes the acquired answer content to determine whether the discussion is suitably progressing. Specifically, in the case where successive two or more answer contents include the same word, evaluating portion 59 sets the evaluation result to "discussion going bad". This is because, when the same word is repeated, it is often the case that no answer content relevant to the question content has been posted, so that it is highly likely that the discussion is not progressing well. Further, in the case where a plurality of answer contents each containing a short sentence are successive, evaluating portion 59 sets the evaluation result to "discussion going bad". This is because, when the answer contents each containing a short sentence are successive, it is often the case that no answer content relevant to the question content has been posted, so that it is highly likely that the discussion is not progressing well.

In the case where a plurality of answer contents do not include the same word and in the case where a plurality of answer contents each containing a short sentence are not successive, evaluating portion 59 sets the evaluation result to "discussion going good". Evaluating portion 59 outputs the evaluation result to second candidate selecting portion 83, while it outputs the evaluation result together with the text of the answer content to answer content modifying portion 61.

When second dividing portion 77 receives the text of the answer content from answer content acquiring portion 57, it divides the received text of the answer content into one or more words, and outputs the obtained one or more words to third category selecting portion 79.

Third category selecting portion 79 uses the one or more words received from second dividing portion 77 as keywords to search cloud management table 91 stored in EEPROM 115 for extracting one or more category records. Third category selecting portion 79 outputs the extracted one or more category records to second candidate selecting portion 83.

Second candidate selecting portion 83 receives an evaluation result from evaluating portion 59, receives a category condition from question content accepting portion 51, and receives one or more category records from first category selecting portion 71, second category selecting portion 75, or third category selecting portion 79.

After first candidate selecting portion 81 outputs a name of an electronic bulletin board to posting portion 53, whenever second candidate selecting portion 83 receives an evaluation result from evaluating portion 59, second candidate selecting portion 83 extracts one of a plurality of names of electronic bulletin boards which are respectively set in the "registered electronic bulletin board" fields in the one or more category records received from first category selecting portion 71, second category selecting portion 75, or third category selecting portion 79. At this time, second candidate selecting portion 83 refrains from extracting the same name as the one that has already been output to posting portion 53. Second candidate selecting portion 83 outputs the extracted electronic bulletin board name to posting portion 53.

The evaluation result received from evaluating portion 59 may show "discussion going bad" or "update going bad". The operation performed by second candidate selecting portion 83 in the case where the evaluation result received from evaluating portion 59 shows "discussion going bad" is different from that in the case where the result shows "update going bad".

### <When the evaluation result shows "discussion going bad">

Second candidate selecting portion 83 may or may not receive one or more category records from first category selecting portion 71. In the case where a user selects a category and sets a category condition in question entry screen 201, one or more category records are received from first category selecting portion 71. When a user selects no category in question entry screen 201, no category record is received from first category selecting portion 71.

In the case where one or more category records are received from first category selecting portion 71, second candidate selecting portion 83 extracts, from among the names of a plurality of electronic bulletin boards respectively set in the "registered electronic bulletin board" fields in the received one or more category records, a name that matches the category condition input from question content accepting portion 51. Second candidate selecting portion 83 then outputs the extracted electronic bulletin board name to posting portion 53.

When the category condition is "three or more", second candidate selecting portion 83 selects a name that is set in the "registered electronic bulletin board" fields in three or more category records out of the one or more category records received from first category selecting portion 71 or second category selecting portion 75. When the category condition is "two or more", second candidate selecting portion 83 selects a name that is set in the "registered electronic bulletin board" fields in two or more category records out of the one or more category records received from first category selecting portion 71 or second category selecting portion 75. When the category condition is "one or more", second candidate selecting portion 83 selects a name that is set in the "registered electronic bulletin board" fields in one or more category records out of the one or more category records received from first category selecting portion 71 or second category selecting portion 75. In the case where a plurality of names of electronic bulletin boards are selected, second candidate selecting portion 83 selects, from among the plurality of names of the electronic bulletin boards selected, a name that is different from the one that has already been output to posting portion 53.

In the case where no category record is received from first category selecting portion 71, second candidate selecting portion 83 extracts a name from among the names that are set in the "registered electronic bulletin board" fields in the one or more category records received from second category selecting portion 75 and that are different from the name already output to posting portion 53. At this time, second candidate selecting portion 83 extracts the name in descending order of the number of category records in which that name is set. For example, assume that four category records are input from second category selecting portion 75, with name A set in three category records, name B set in two category records, and names C, D, and E each set in one category record among them. At this time, second candidate selecting portion 83 extracts name B in the first place, because name A has already been extracted by first candidate selecting portion 81 and output to posting portion 53. Second candidate selecting portion 83 extracts name C, name D, and name E arbitrarily in the second through fourth places.

### <When the evaluation result shows "update going bad">

Second candidate selecting portion 83 receives one or more category records from third category selecting portion 79. Second candidate selecting portion 83 extracts a name from among the names that are set in the "registered electronic bulletin board" fields in the one or more category records received from third category selecting portion 79 and that are different from the name already output to posting portion 53. At this time, second candidate selecting portion 83 extracts the name in descending order of the number of category records in which that name is set. For example, assume that four category records are input from third category selecting portion 79, with a name A1 set in three category records, a name B1 set in two category records, and names C1, D1, and E1 each set in one category record among them. In this case, second candidate selecting portion 83 extracts name A1 in the first place, and extracts name B1 in the second place. Second candidate selecting portion 83 extracts name C1, name D1, and name E1 arbitrarily in the third, fourth, and fifth places.

Third category selecting portion 79 selects the category records on the basis of the words obtained by dividing the text of the answer content. This enables selection of a category that is relevant to the new words included in the answer content. As a result, the same question content as the previously posted one can be posted on the electronic bulletin board that belongs to the category relevant to the posted answer content, to thereby cause another discussion to be developed by another user.

When posting portion 53 receives a new electronic bulletin board name from second candidate selecting portion 83, posting portion 53 accesses, via the communication I/F, the electronic bulletin board specified by the received electronic bulletin board name, so as to post the text of the question content received from question content accepting portion 51. The new electronic bulletin board name received from second candidate selecting portion 83 is different from the electronic bulletin board name received from first candidate selecting portion 81. It is here assumed that the name of the electronic bulletin board provided in server 31B is received from second candidate selecting portion 83. In this case, posting portion 53 receives a Web page of the electronic bulletin board provided in server 31B by accessing server 31B using a URL which has been predetermined for the electronic bulletin board provided in server 31B. Posting portion 53 analyzes the received Web page and transmits the text of the question received from question content accepting portion 51 to server 31B, for posting a question. When a question is posted, server 31B generates a new thread in the electronic bulletin board to accept, from any user, any answer to the posted question.

It is noted that when posting portion 53 posts the text of the question content received from question content accepting portion 51 on the electronic bulletin board specified by the new electronic bulletin board name received from second candidate selecting portion 83, posting portion 53 may additionally post the text of the answer contents posted on the previous electronic bulletin board, except for any answer content that was determined to be inappropriate. As a result, when the same question content is posted on a plurality of electronic bulletin boards, the appropriate answer contents that were obtained in the electronic bulletin board(s) on which the question content was posted in the past can be continuously seen in the electronic bulletin board on which the question content was posted lately.

Answer content modifying portion 61 receives the evaluation result and the text of the answer content from evaluating portion 59. When the evaluation result received from evaluating portion 59 shows "discussion going bad", answer content modifying portion 61 modifies the text of the answer content, and outputs the text of the modified answer content to answer content displaying portion 63. The evaluation result shows "discussion going bad" in the case where a plurality of answer contents include the same word, or short sentences are successive. In the case where a plurality of answer contents include the same word, answer content modifying portion 61 deletes text of the answer content including the same word onward. Further, in the case where short sentences are successive in the text of the answer contents, answer content modifying portion 61 deletes text of the successive short sentences onward. This is because it is unnecessary to display the inappropriate answers.

When communication I/F portion 112 receives a command requesting an answer from PC 21 operated by the user who has posted the question content, answer content displaying portion 63 outputs an acquire instruction to answer content acquiring portion 57. As previously described, when answer content acquiring portion 57 receives the acquire instruction, it acquires the text of the answer content and outputs it to evaluating portion 59. Then, on the basis of the evaluation result by evaluating portion 59, the answer content is modified by answer content modifying portion 61, and the modified answer content is input to answer content displaying portion 63.

Answer content displaying portion 63 generates an answer display screen including the text of the answer content input from answer content modifying portion 61, and transmits a Web page including the answer display screen, via communication I/F portion 112, to PC 21 which has transmitted the request. When PC 21 receives the Web page including the answer display screen, it displays the answer display screen on a display.

It is noted that, before transmitting the answer display screen, answer content displaying portion 63 transmits a login screen to PC 21 and authenticates a user who operates PC 21 using a user ID and a password which the user inputs into PC 21. Therefore, MFP 100 assumes all of data received from PC 21 to which the answer display screen has been transmitted following the user authentication, as data input by the authenticated user.

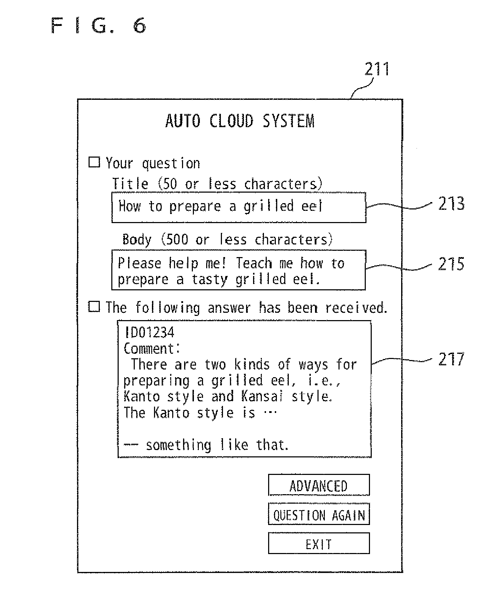

Fig. 6 is a first diagram showing an example of the answer display screen. Referring to Fig. 6, an answer display screen 211 shows the title: "How to prepare a grilled eel" in an area 213, a question content: "Please help me! Teach me how to prepare a tasty grilled eel." in an area 215, and an answer content to the question content: "There are two kinds of ways for preparing a grilled eel, i.e., Kanto style and Kansai style. The Kanto style is ... something like that." in an area 217. In the content, "..." indicates that character strings, which are actually existent, are omitted. When a key having "Advanced" displayed thereon is designated, the electronic bulletin board on which this question was posted is accessed to display a new Web page. When a key having "Question again" displayed thereon is designated, the question entry screen shown in Fig. 4 is displayed. When a key having "Exit" displayed thereon is designated, an end instruction is transmitted to the server including the electronic bulletin board on which the question content was posted, such as server 31A, where in turn the thread is closed. It is thus managed such that from that time on, no more answer to the question will be accepted in server 31A.

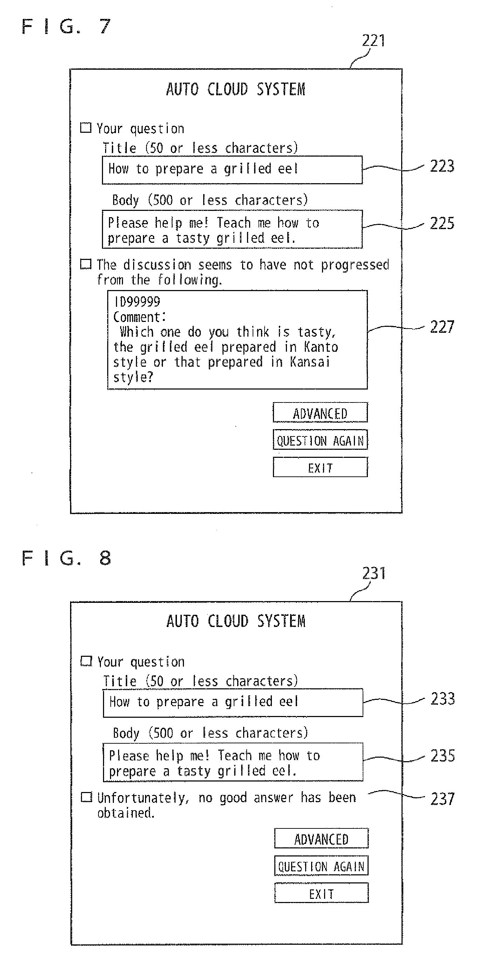

Fig. 7 is a second diagram showing an example of the answer display screen. The answer display screen shown in Fig. 7 is displayed in the case where the evaluation result is set to "discussion going bad" by evaluating portion 59. Referring to Fig. 7, an answer display screen 221 shows the title: "How to prepare a grilled eel" in an area 223, a question content: "Please help me! Teach me how to prepare a tasty grilled eel." in an area 225, and an answer content to the question content: "Which one do you think is tasty, the grilled eel prepared in Kanto style or that prepared in Kansai style?" in an area 227. Further, a message: "The discussion seems to have not progressed from the following." is displayed above the area 227. This can inform a user that although the discussion progressed to some extent, it stopped on the way.

Fig. 8 is a third diagram showing an example of the answer display screen. The answer display screen shown in Fig. 8 is displayed in the case where the evaluation result is set to "update going bad" by evaluating portion 59. Referring to Fig. 8, an answer display screen 231 shows the title: "How to prepare a grilled eel" in an area 233, a question content: "Please help me! Teach me how to prepare a tasty grilled eel." in an area 235, and a message: "Unfortunately, no good answer has been obtained." in an area 237. This can inform a user that a fruitful discussion was not developed in the electronic bulletin board.

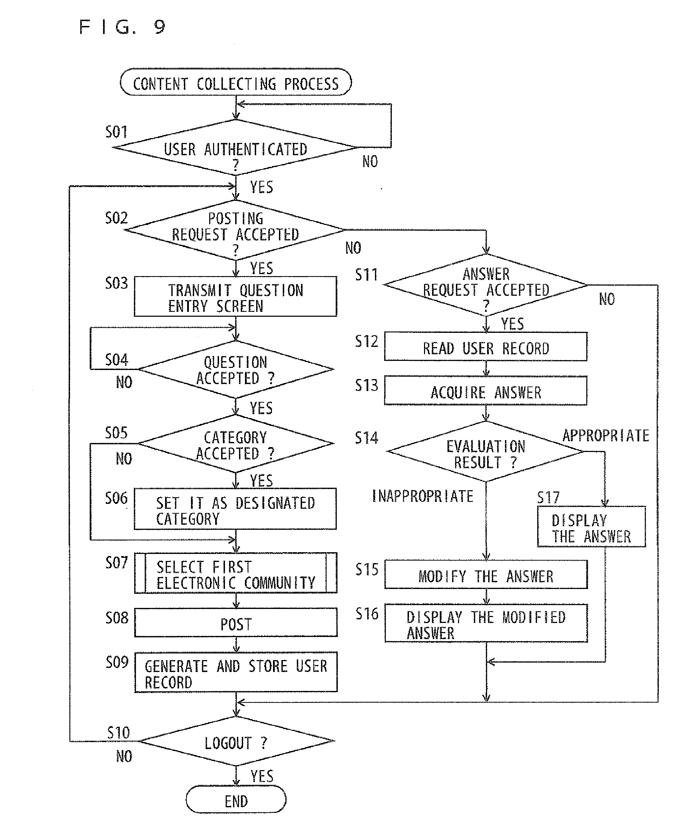

Fig. 9 is a flowchart illustrating an example of the flow of a content collecting process. The content collecting process is carried out by CPU 111 included in MFP 100 as CPU 111 executes a content collecting program stored in ROM 113, EEPROM 115, HDD 116, or memory card 119A. Referring to Fig. 9, CPU 111 determines whether a user authentication has succeeded (step S01). CPU 111 is in a standby mode until the user authentication succeeds (NO in step S01), and once the user authentication has succeeded (YES in step S01), the process proceeds to step S02.

In step S02, it is determined whether a posting request has been accepted. When communication I/F portion 112 receives a command requesting posting from PC 21, for example, CPU 111 accepts the posting request. If the posting request has been accepted, the process proceeds to step S03; otherwise, the process proceeds to step S11. In step S11, it is determined whether an answer request has been accepted. When communication I/F portion 112 receives a command requesting an answer from PC 21, for example,, CPU 111 accepts the answer request. If the answer request has been accepted, the process proceeds to step S12; otherwise, the process proceeds to step S10.

In step S03, CPU 111 transmits a question entry screen to PC 21 which has transmitted the posting request. CPU 111 then determines whether a question has been accepted (step S04). When communication I/F portion 112 receives text of a question content from PC 21 to which the question entry screen was transmitted, it is determined that the question has been accepted. CPU 111 is in a standby mode until the question is accepted (NO in step S04), and once the question has been accepted, the process proceeds to step S05.

In step S05, it is determined whether a category has been accepted. When communication I/F portion 112 receives a category from PC 21 to which the question entry screen was transmitted, CPU 111 determines that the category has been accepted. If the category has been accepted, the process proceeds to step S06; otherwise, the process proceeds to step S07, with step S06 being skipped. In step S06, CPU 111 sets the accepted category as a designated category, and the process proceeds to step S07. In the case where a category condition is accepted together with the category, the category condition is stored in association with the designated category.

In step S07, a first electronic community selecting process is performed, and the process proceeds to step S08. The first electronic community selecting process, which will be described later in detail, is a process of selecting an electronic bulletin board for posting a question content. In step S08, the question content accepted in step S04 is posted on the electronic bulletin board selected in step S07. It is here assumed that the electronic bulletin board provided in server 3LA is selected in the first electronic community selecting process performed in step S07. In this case, CPU 111 receives a Web page of the electronic bulletin board provided in server 31A by accessing server 31A using a URL which has been predetermined for the electronic bulletin board provided in server 31A, analyzes the received Web page, and transmits the question content accepted in step S04 to server 31A, for posting a question. Server 31A, on receipt of the question content, generates a new thread in the electronic bulletin board to accept, from any user, any answer to the received question content.

In step S09, CPU 111 generates and stores a user record in EEPROM 115. The user record includes user identification information for identifying the user who has been authenticated in step S01, the question content which has been accepted in step S04, and a URL of the electronic bulletin board which has been selected in step S07.

In step S10, it is determined whether a logout instruction has been accepted. If so, the content collecting process is terminated; otherwise, the process returns to step S02.

On the other hand, in step S12, CPU 111 reads from EEPROM 115 the user record including the user identification information of the user authenticated in step S01. This user record is the one that has been stored in step S09. In the following step S13, CPU 111 acquires an answer content. Specifically, CPU 111 accesses the URL included in the user record read in step S12 to receive a Web page including an answer content, to thereby acquire the answer content from the received Web page. Then, CPU 111 branches the process in accordance with the evaluation result of the acquired answer content (step S14). If the evaluation result shows "going bad", the process proceeds to step S15; otherwise, the process proceeds to step S17. In the case where no answer content is posted within a prescribed time from when the question content was posted, or even in the case where an answer content has been posted before a lapse of the prescribed time from when the question content was posted, if the frequency of update of the answer contents is a prescribed threshold value or less, then CPU 111 determines the evaluation result to be "update going bad". Further, in the case where a plurality of answer contents including the same word are successive, or in the case where a plurality of answer contents each including a short sentence are successive, CPU 111 determines the evaluation result to be "discussion going bad".

In step S15, CPU 111 modifies the answer content acquired in step S13, and the process proceeds to step S16. In step S16, CPU 111 displays the modified answer content, and the process proceeds to step S10. For example, CPU 111 displays the answer display screen shown in Fig. 7 or 8, on display portion 160A. On the other hand, in step S17, CPU 111 displays the answer content acquired in step S13, as it is, on display portion 160A, and the process proceeds to step S10.

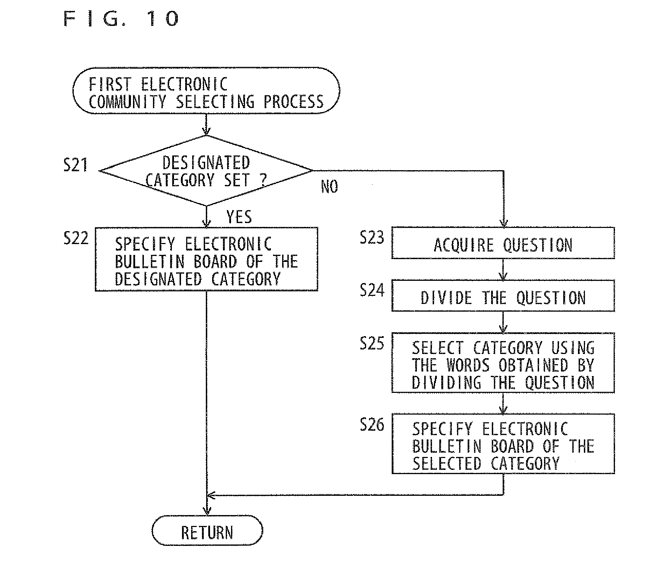

Fig. 10 is a flowchart illustrating an example of the flow of the first electronic community selecting process. The first electronic community selecting process is performed in step S07 in Fig. 9. Referring to Fig. 10, it is determined whether a designated category has been set (step S21). The designated category is set in S06 in Fig. 9. If the designated category has been set, the process proceeds to step S22; otherwise, the process proceeds to step S23.

In step S22, CPU 111 extracts one of the names of the electronic bulletin boards included in the designated category, to specify the electronic bulletin board corresponding to the extracted name. In the case where there are a plurality of designated categories and no category condition has been associated with the designated categories, CPU 111 refers to cloud management table 91 stored in EEPROM 115 to extract a plurality of category records having respective ones of the plurality of designated categories set in their "category" fields, and selects a name of the electronic bulletin board that is set in the "registered electronic bulletin board" fields of a largest number of records among the extracted category records. The process then returns to the content collecting process. In the case where there are a plurality of designated categories and a category condition has been associated with the designated categories, CPU 111 varies processes according to the category conditions. When the category condition is "three or more", CPU 111 extracts the plurality of category records having the plurality of designated categories set in their "category" fields, and selects a name of the electronic bulletin board that is set in the "registered electronic bulletin board" fields of three or more category records out of the extracted category records. When the category condition is "two or more", CPU 111 extracts the plurality of category records having the plurality of designated categories set in their "category" fields, and selects a name of the electronic bulletin board that is set in the "registered electronic bulletin board" fields of two or more category records out of the extracted category records. When the category condition is "one or more", CPU 111 extracts the plurality of category records having the plurality of designated categories set in their "category" fields, and selects a name of the electronic bulletin board that is set in the "registered electronic bulletin board" fields of one or more category records out of the extracted category records. When two or more names of the electronic bulletin boards are selected, CPU 111 selects an arbitrary one of the names of the electronic bulletin boards that have been selected.

On the other hand, in step S23, CPU 111 acquires the question which has been accepted in step S04 in the content collecting process shown in Fig. 9. CPU 111 then divides the acquired question into a plurality of words (step S24). Further, CPU 111 uses the obtained words as keywords to select a category (step S25). Specifically, CPU 111 searches cloud management table 91 stored in EEPROM 115 to extract a category record using the words which were obtained by dividing the question as the keywords. Thereafter, CPU 111 extracts a name from among names of the electronic bulletin boards included in the selected category, to thereby specify the electronic bulletin board corresponding to the extracted name (step S26). In the case where a plurality of categories are selected in step S25, CPU 111 refers to a plurality of category records having the plurality of selected categories set in their "category" fields, to extract a name of the electronic bulletin board that is set in the "registered electronic bulletin board" fields of a largest number of records among those category records.

Further, in the case where a category condition is set, if the category condition is "three or more", CPU 111 selects a name that is set in the "registered electronic bulletin board" fields in three or more category records out of the plurality of category records extracted in step S25. If the category condition is "two or more", CPU 111 selects a name that is set in the "registered electronic bulletin board" fields in two or more category records out of the plurality of category records extracted in step S25. If the category condition is "one or more", CPU 111 selects a name that is set in the "registered electronic bulletin board" fields in one or more category records out of the plurality of category records extracted in step S25. In the case where two or more names of electronic bulletin boards are selected, CPU 111 selects an arbitrary one of the names of the electronic bulletin boards that have been selected.

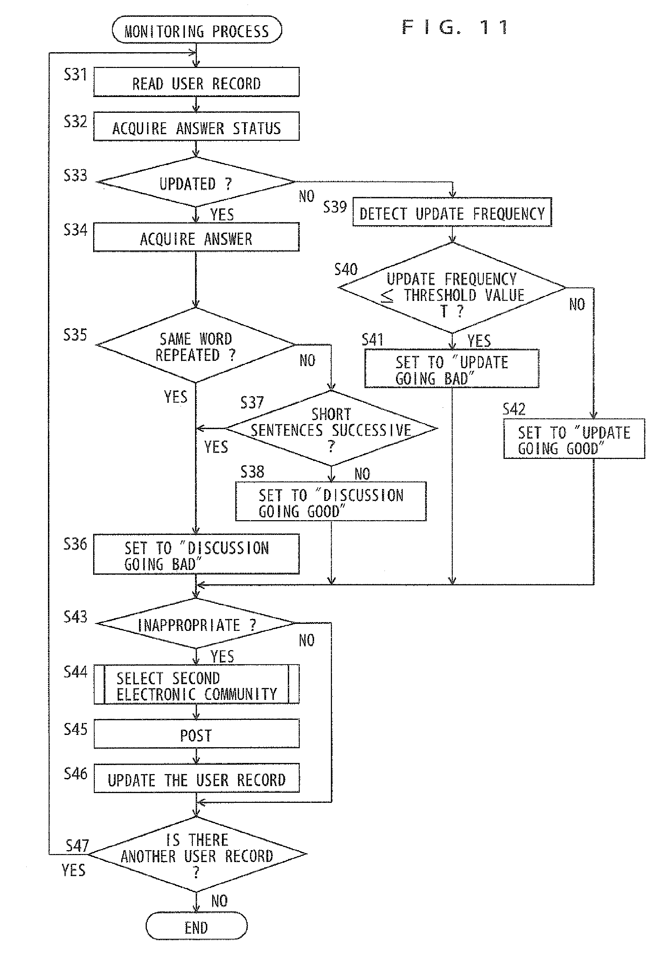

Fig. 11 is a flowchart illustrating an example of the flow of a monitoring process. The monitoring process is carried out at a prescribed time interval TH by CPU 111 included in MFP 100 as CPU 111 executes the content collecting program stored in ROM 113, EEPROM 115, HDD 116, or memory card 119A.

Referring to Fig. 11, CPU 111 reads a user record stored in EEPROM 115 (step S31). In the case where a plurality of user records are stored, CPU 111 reads one of the plurality of user records. In the following step S32, CPU 111 accesses a URL included in the read user record to acquire an answer status. Specifically, CPU 111 acquires a Web page that is specified by the URL included in the read user record.

In the following step S33, it is determined whether the acquired Web page has been updated. If so, the process proceeds to step S34; otherwise, the process proceeds to step S39. That is, as CPU 111 performs the monitoring process at prescribed time interval TH, CPU 111 compares the latest state of the Web page with that the time TH before, to determine whether the Web page has been changed.

In step S34, CPU 111 acquires text of an answer content included in the Web page. CPU 111 then determines whether the same word is repeated in the acquired answer contents (step S35). When successive answer contents each include the same word, CPU 111 determines that the same word is repeated. If so, the process proceeds to step S36; otherwise, the process proceeds to step S37.

In step S37, it is determined whether short sentences are successive in the text of the acquired answer contents. When successive answer contents each include a short sentence, CPU 111 determines that short sentences are successive. If so, the process proceeds to step S36; otherwise, the process proceeds to step S38.

In step S36, CPU 111 sets the evaluation result to "discussion going bad", and the process proceeds to step S43. On the other hand, in step S38, CPU 111 sets the evaluation result to "discussion going good", and the process proceeds to step S43.

On the other hand, in step S39, CPU 111 detects the frequency of update (update frequency) of the Web page acquired in step S32. CPU 111 detects the update frequency on the basis of the time when the text of the answer content included in the Web page was posted. In step S40, CPU 111 compares the detected update frequency with a threshold value T. The update frequency is the number of answer contents posted per unit of time T, which is calculated from the number of answer contents which have been posted and the time elapsed from when the question content was posted. Unit of time T is a predetermined value and is preferably longer than time interval TH at which the monitoring process is performed. If the update frequency is equal to or less than threshold value T, the process proceeds to step S41; otherwise, the process proceeds to step S42. In step S41, CPU 111 sets the evaluation result to "update going bad", and the process proceeds to step S43. In step S42, CPU 111 sets the evaluation result to "update going good", and the process proceeds to step S43,

It is noted that, in place of the evaluation based on the update frequency, CPU 111 may determine the evaluation result to be "update going bad" in the case where the time elapsed from when the last answer content was posted is longer than a predetermined period. Still alternatively, CPU 111 may determine the evaluation result to be "update going bad" in the case where the time obtained by dividing the time elapsed from when the question content was posted by the number of posted answer contents is longer than a predetermined period

In step S43, it is determined whether the evaluation result shows "going bad". If the evaluation result shows "update going bad" or "discussion going bad", the process proceeds to step S44; otherwise, the process proceeds to step 547. In step S44, CPU 111 performs a second electronic community selecting process, and the process proceeds to step S45. The second electronic community selecting process, which will be described later in detail, is a process of selecting a new electronic bulletin board (second electronic community).

In step S45, the same question as that included in the Web page acquired in step S32 is posted on the electronic bulletin board selected in step S44. It is here assumed that the electronic bulletin board selected in step S44 is the electronic bulletin board provided in server 31B. In this case, CPU 111 receives a Web page of the electronic bulletin board provided in server 31B by accessing server 31B using a URL which has been predetermined for the electronic bulletin board provided in server 31B, analyzes the received Web page, and transmits the same question as that included in the Web page acquired in step S32 to server 31B, for posting a question. Server 31B, on receipt of the question, generates a new thread in the electronic bulletin board to accept, from any user, any answer to the received question.

In step S46, CPU 111 updates the user record. CPU 111 updates the URL of the user record which has been read in step S31 with the URL predetermined for the electronic bulletin board selected in step S44, and stores the updated user record in EEPROM 115.

In step S47, it is determined whether a user record which has not yet been read in step S31 is stored in EEPROM 115. If so, the process returns to step S31; otherwise, the monitoring process is terminated.

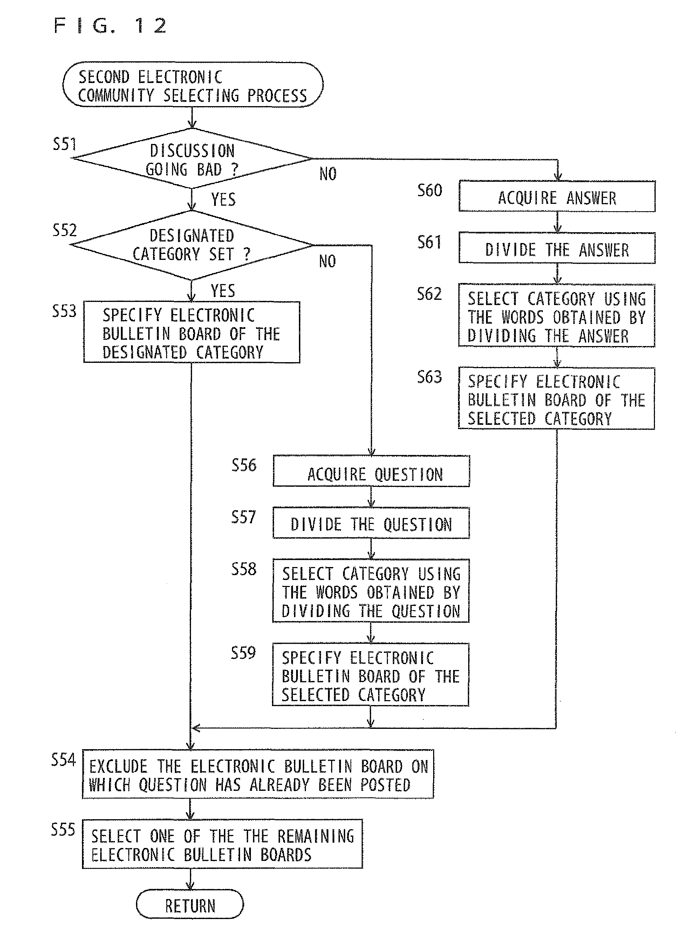

Fig. 12 is a flowchart illustrating an example of the flow of the second electronic community selecting process. The second electronic community selecting process is performed in step S44 in the monitoring process shown in Fig. 11. Referring to Fig. 12, it is determined whether the evaluation result shows "discussion going bad" (step S51). If so, the process proceeds to step S52; otherwise, the process proceeds to step S60. The process proceeds to step S60 when the evaluation result shows "update going bad".

In step S52, it is determined whether a designated category has been set. The designated category is set in step S06 in the content collecting process in Fig. 9. If the designated category has been set, the process proceeds to step S53; otherwise, the process proceeds to step S56.

In step S53, CPU 111 specifies the electronic bulletin boards included in the designated category, and the process proceeds to step S54. CPU 111 refers to cloud management table 91 stored in EEPROM 115 to extract a category record which has the designated category set in its "category" field, and specifies the electronic bulletin boards in accordance with the names which are set in the "registered electronic bulletin board" field of the extracted category record. In the case where there are a plurality of designated categories and no category condition has been associated with the designated categories, then CPU 111 refers to cloud management table 91 stored in EEPROM 115 to extract a plurality of category records which have the plurality of designated categories, respectively, in their "category" fields, and specifies the electronic bulletin boards in accordance with the names which are set in the "registered electronic bulletin board" fields of the extracted category records.

In the case where there are a plurality of designated categories and a category condition is associated with the designated categories, then CPU 111 varies the processes according to the category conditions. When the category condition is "three or more", CPU 111 extracts a plurality of category records including the plurality of designated categories in their "category" fields, and selects a name that is set in the "registered electronic bulletin board" fields in three or more records out of the extracted category records. When the category condition is "two or more", CPU 111 extracts the plurality of category records including the plurality of designated categories in their "category" fields, and selects a name that is set in the "registered electronic bulletin board" fields in two or more records out of the extracted category records. When the category condition is "one or more", CPU 111 extracts the plurality of category records including the plurality of designated categories in their "category" fields, and selects a name that is set in the "registered electronic bulletin board" fields in one or more records out of the extracted category records.

In the following step S54, when the process proceeded from step S53, CPU 111 excludes, from among the electronic bulletin boards specified in step S53, the electronic bulletin board on which the question content has already been posted. Further, CPU 111 selects one of the remaining electronic bulletin boards which are obtained as result of excluding the electronic bulletin board on which the question content has already been posted (step S55). At this time, CPU 111 preferably selects one of the remaining electronic bulletin boards in descending order of the number of category records in which the corresponding name is set in the "registered electronic bulletin board" fields.

In step S56, CPU 111 acquires the question content from the Web page acquired in step S32 shown in Fig. 11. Further, CPU 111 divides the acquired question content into a plurality of words (step S57). Furthermore, CPU 111 selects a category using the obtained words as keywords (step S58). 8specifically, CPU 111 searches cloud management table 91 stored in EEPROM 115 to extract at least one category record, using the words obtained by dividing the question content as keywords, and selects a category that is set in the "category" field in the extracted category record. Then, CPU 111 specifies the electronic bulletin boards included in the selected category (step S59), and the process proceeds to step S54. CPU 111 specifies the electronic bulletin boards in accordance with the names that are set in the "registered electronic bulletin board" field in the category record extracted in step S58.

In step S54, when the process proceeded from step S59, CPU 111 excludes, from among the electronic bulletin boards specified in step S59, the electronic bulletin board on which the question content has already been posted. Further, CPU 111 selects one electronic bulletin board from among the remaining electronic bulletin boards obtained as result of excluding the electronic bulletin board on which the question content has already been posted (step S55). At this time, CPU 111 preferably selects one of the remaining electronic bulletin boards in descending order of the number of category records in which the corresponding name is set in the "registered electronic bulletin board" fields.

In step S60, CPU 111 acquires the answer content from the Web page acquired in step S32 shown in Fig. 11. Further, CPU 111 divides the acquired answer content into a plurality of words (step S61). Furthermore, CPU 111 selects at least one category using the obtained words as keywords (step S62). Specifically, CPU 111 searches cloud management table 91 stored in EEPROM 115 to extract a category record using the words obtained by dividing the answer content in step S61 as keywords, and selects a category that is set in the "category" field in the extracted category record. CPU 111 then specifies the electronic bulletin boards included in the selected category (step S63), and the process proceeds to step S54. CPU 111 specifies the electronic bulletin boards in accordance with the names that are set in the "registered electronic bulletin board" field in the category record extracted in step S62.

In step S54, when the process proceeded from step S63, CPU 111 excludes, from among the electronic bulletin boards specified in step S63, the electronic bulletin board on which the question content has already been posted. Further, CPU 111 selects one electronic bulletin board from among the remaining electronic bulletin boards obtained as result of excluding the electronic bulletin board on which the question content has already been posted (step S55). At this time, CPU 111 preferably selects one of the remaining electronic bulletin boards in descending order of the number of category records in which the corresponding name is set in the "registered electronic bulletin board" fields.

As described above, MFP 100 according to the present embodiment selects electronic bulletin boards for posting a question content one by one from among a plurality of electronic bulletin boards until an appropriate answer content is acquired. This allows the appropriate answer content to be collected without the need for a user to perform an operation of selecting an electronic bulletin board for posting a question content thereon from among a plurality of electronic bulletin boards.

In the case where no answer content related to the question content is posted before a lapse of a prescribed time after the question content was posted, or in the case where the frequency of update per prescribed unit of time, which is calculated on the basis of the number of posted answer contents and the time elapsed from the posting of the question content, is a threshold value T or less, MFP 100 determines that the electronic bulletin board is inappropriate. This can make the time required for acquiring the appropriate answer content as short as possible.

Further, MFP 100 posts the question content on one of a plurality of electronic communities that is included in the category selected by the user. This increases the probability that an appropriate answer content can be acquired early.

Further, MFP 100 selects a category on the basis of the character strings included in the question content, allowing an electronic bulletin board related to the question content to be selected.

Furthermore, MFP 100 selects a category on the basis of the character strings included in the answer content, allowing an electronic bulletin board related to the answer content to be selected.

Still further, when MFP 100 posts a question content on a newly selected electronic bulletin board, it posts, together with the question content, appropriate answer contents among the answer contents that were posted on the electronic bulletin board on which the question content had been previously posted. As a result, the appropriate answer contents obtained in the electronic bulletin board(s) on which the question content was posted in the past can be continuously seen in the electronic bulletin board that is selected later.

As a way of selecting an electronic bulletin board for posting a question content from among a plurality of electronic bulletin boards, the following three methods have been described. In the first method, when a category has been designated by a user, an electronic bulletin board included in the category is selected. In the second method, an electronic bulletin board included in a category that is associated with a word contained in the question content is selected. In the third method, an electronic bulletin board included in a category that is associated with a word contained in the answer content is selected. In selecting an electronic bulletin board for posting a question content, one of the first through third methods described above may be used alone, or a combination of two or more of them may be used. For example, an electronic bulletin board that is selected by all of the methods may be set as the electronic bulletin board for posting a question content. Which one of the first through third methods or which combination thereof to adapt may be selected by a user or determined in advance. For example, it may be configured such that an electronic bulletin board is firstly selected in accordance with the first method, and if an appropriate answer content cannot be acquired even when the question content is posted on all the electronic bulletin boards selected by the first method, an electronic bulletin board may be selected in accordance with the second method. Then, if an appropriate answer content cannot still be acquired using the second method, an electronic bulletin board may be selected in accordance with the third method.

While content collecting system 1 and MFP 100 as an example of the content collecting apparatus included in the content collecting system have been described in the above embodiment, PC 21 or 22 can be used as the content collecting apparatus. Further, the present invention may of course be understood as a content collecting method for performing the processing shown in Figs. 9 to 12, or as a content colleting program for causing CPU 111 controlling MFP 100, or PC 21 or 22 to perform the content collecting method.

Still further, while an electronic bulletin board has been described as an example of the electronic community, it may be for example an e-mail or message switching system as long as it is the electronic community which exchanges contents among a plurality of users via a network.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A content collecting apparatus (100) capable of accessing a plurality of electronic communities which each exchange contents among a plurality of users via a network (11, 13), the content collecting apparatus comprising:
a content accepting means (S04) to accept as a question content a content input by a user;
a selecting means (S05-S07, S44) to select from among said plurality of electronic communities at least one electronic community for posting said question content;
a posting means (S08, S45) to post said question content on said selected electronic community; and
an evaluating means (S33-S43) to evaluate the electronic community on which said question content has been posted, on the basis of an answer content posted in correspondence with said question content on the electronic community on which said question content was posted,
said selecting means (S05-S07, S44) selecting, from among said plurality of electronic communities, a second electronic community different from a first electronic community on which said question content was posted, on the basis of the evaluation result by said evaluating means (S44).

2. The content collecting apparatus according to claim 1, wherein in the case where each of successive two or more answer contents among a plurality of answer contents posted in correspondence with said question content includes a same word, said evaluating means (S33-S43) determines said selected electronic community to be inappropriate (S35).

3. The content collecting apparatus according to claim 1, wherein in the case where each of successive two or more answer contents among a plurality of answer contents posted in correspondence with said question content includes only a sentence which is shorter than a prescribed length, said evaluating means (S33-S43) determines said selected electronic community to be inappropriate (S37).

4. The content collecting apparatus according to claim 1, wherein in the case where no answer content is posted in correspondence with said question content before the time elapsed from when said question content was posted exceeds a prescribed time, or in the case where a frequency of update per prescribed unit of time calculated from the number of posted answer contents and said elapsed time is a prescribed value or less, said evaluating means (S33-S43) determines said selected electronic community to be inappropriate (S40).

5. The content collecting apparatus according to any one of claims 1 to 4, wherein
each of said plurality of electronic communities is assigned to one or more of a plurality of categories,
said selecting means (S05-S07, S44) includes a first category selecting means (S06) which selects at least one category selected by a user from among said plurality of categories, and
said selecting means (S05-S07, S44) selects at least one electronic community from among the one or more electronic communities assigned to the category selected by said first category selecting means (S07).

6. The content collecting apparatus according to any one of claims 1 to 4, wherein
each of said plurality of electronic communities is assigned to one or more of a plurality of categories,
said selecting means (S05-S07, S44) includes
a first dividing means (S24) which divides said question content into one or more first character strings, and
a second category selecting means (S25) which selects at least one of said plurality of categories on the basis of said one or more first character strings, and
said selecting means selects at least one electronic community from among the one or more electronic communities assigned to the category selected by said second category selecting means (S26).

7. The content collecting apparatus according to any one of claims 1 to 4, wherein
each of said plurality of electronic communities is assigned to one or more of a plurality of categories,
said selecting means (S05-S07, S44) includes
a second dividing means (S61) which divides said answer content into one or more second character strings, and
a third category selecting means (S62) which selects at least one of said plurality of categories on the basis of said one or more second character strings, and
said selecting means selects at least one electronic community from among the one or more electronic communities assigned to the category selected by said third category selecting means (S63).

8. The content collecting apparatus according to any one of claims 1 to 4, wherein in the case where said second electronic community is selected by said selecting means, said posting means (S08, S45) posts at least one of answer contents which have been posted on said first electronic community, together with said question content, on said second electronic community (S45).

9. The content collecting apparatus according to any one of claims 1 to 4, further comprising an adding means (65) to add a new electronic community to said plurality of electronic communities.

10. The content collecting apparatus according to any of claims 1 to 4, further comprising a Web server function.

11. A content collecting method performed in a content collecting apparatus (100), the content collecting apparatus being capable of accessing a plurality of electronic communities which each exchange contents among a plurality of users via a network (11, 13), the content collecting method comprising:
a step (S04) of accepting as a question content a content input by a user;
a community selecting step (S05-S07, S44) of selecting from among said plurality of electronic communities at least one electronic community for posting said question content;
a posting step (S08, S45) of posting said question content on said selected electronic community; and
an evaluating step (S33-S43) of evaluating said selected electronic community on which said question content was posted, on the basis of an answer content posted in correspondence with said question content on said selected electronic community,
said community selecting step (S05-S07, S44) including a step (S44) of selecting, from among said plurality of electronic communities, a second electronic community different from a first electronic community on which said question content was posted, on the basis of the evaluation result in said evaluating step.

12. The content collecting method according to claim 11, wherein said evaluating step (S33-S43) includes a step (S35) of determining said selected electronic community to be inappropriate in the case where each of successive two or more answer contents among a plurality of answer contents posted in correspondence with said question content includes a same word.

13. The content collecting method according to claim 11, wherein said evaluating step (S33-S43) includes a step (S37) of determining said selected electronic community to be inappropriate in the case where each of successive two or more answer contents among a plurality of answer contents posted in correspondence with said question content includes only a sentence which is shorter than a prescribed length.

14. The content collecting method according to claim 11, wherein said evaluating step (S33-S43) includes a step (S40) of determining said selected electronic community to be inappropriate in the case where no answer content is posted in correspondence with said question content before the time elapsed from when said question content was posted exceeds a prescribed time, or in the case where a frequency of update per prescribed unit of time calculated from the number of posted answer contents and said elapsed time is a prescribed value or less.

15. The content collecting method according to any one of claims 11 to 14, wherein
each of said plurality of electronic communities is assigned to one or more of a plurality of categories, and
said community selecting step (S05-S07, S44) includes
a first category selecting step (S06) of selecting at least one category selected by a user from among said plurality of categories, and
a step (S07) of selecting at least one electronic community from among the one or more electronic communities assigned to the category selected in said first category selecting step.

16. The content collecting method according to any one of claims 11 to 14, wherein
each of said plurality of electronic communities is assigned to one or more of a plurality of categories, and
said community selecting step (S05-S07, S44) includes
a first dividing step (S24) of dividing said question content into one or more first character strings,
a second category selecting step (S25) of selecting at least one of said plurality of categories on the basis of said one or more first character strings, and
a step (S26) of selecting at least one electronic community from among the one or more electronic communities assigned to the category selected in said second category selecting step.

17. The content collecting method according to any one of claims 11 to 14, wherein
each of said plurality of electronic communities is assigned to one or more of a plurality of categories, and
said community selecting step (S05-S07, S44) includes
a second dividing step (S61) of dividing said answer content into one or more second character strings,
a third category selecting step (S62) of selecting at least one of said plurality of categories on the basis of said one or more second character strings, and
a step (S63) of selecting at least one electronic community from among the one or more electronic communities assigned to the category selected in said third category selecting step.

18. The content collecting method according to any one of claims 11 to 14, wherein said posting step (S08, S45) includes a step (S45) of, in the case where said second electronic community is selected in said selecting step, posting at least one of answer contents which have been posted on said first electronic community, together with said question content, on said second electronic community.

19. The content collecting method according to any one of claims 11 to 14, further comprising an adding step (65) of adding a new electronic community to said plurality of electronic communities.

20. The content collecting method according to any one of claims 11 to 14, wherein said content collecting apparatus further includes a Web server function.

21. A computer readable recording medium (119A) encoded with a content collecting program performed by a computer (111) controlling a content collecting apparatus (100), the content collecting apparatus being capable of accessing a plurality of electronic communities which each exchange contents among a plurality of users via a network (11, 13), the content collecting program causing said computer to execute processing comprising:
a step (S04) of accepting as a question content a content input by a user;
a community selecting step (S05-S07, S44) of selecting from among said plurality of electronic communities at least one electronic community for posting said question content;
a posting step (S08, S45) of posting said question content on said selected electronic community; and
an evaluating step (S33-S43) of evaluating said selected electronic community on which said question content was posted, on the basis of an answer content posted in correspondence with said question content on said selected electronic community,
said community selecting step (S05-507, S44) including a step (S44) of selecting, from among said plurality of electronic communities, a second electronic community different from a first electronic community on which said question content was posted, on the basis of the evaluation result in said evaluating step.

22. The computer-readable recording medium encoded with the content collecting program according to claim 21, wherein said evaluating step (S33-S43) includes a step (S35) of determining said selected electronic community to be inappropriate in the case where each of successive two or more answer contents among a plurality of answer contents posted in correspondence with said question content includes a same word.

23. The computer-readable recording medium encoded with the content collecting program according to claim 21, wherein said evaluating step (S33-S43) includes a step (S37) of determining said selected electronic community to be inappropriate in the case where each of successive two or more answer contents among a plurality of answer contents posted in correspondence with said question content includes only a sentence which is shorter than a prescribed length.

24. The computer-readable recording medium encoded with the content collecting program according to claim 21, wherein said evaluating step (S33-S43) includes a step (S40) of determining said selected electronic community to be inappropriate in the case where no answer content is posted in correspondence with said question content before the time elapsed from when said question content was posted exceeds a prescribed time, or in the case where a frequency of update per prescribed unit of time calculated from the number of posted answer contents and said elapsed time is a prescribed value or less.

25. The computer-readable recording medium encoded with the content collecting program according to any one of claims 21 to 24, wherein
each of said plurality of electronic communities is assigned to one or more of a plurality of categories, and
said community selecting step (S05-S07, S44) includes
a first category selecting step (S06) of selecting at least one category selected by a user from among said plurality of categories, and
a step (S07) of selecting at least one electronic community from among the one or more electronic communities assigned to the category selected in said first category selecting step.

26. The computer-readable recording medium encoded with the content collecting program according to any one of claims 21 to 24, wherein
each of said plurality of electronic communities is assigned to one or more of a plurality of categories, and
said community selecting step (S05-S07, S44) includes
a first dividing step (S24) of dividing said question content into one or more first character strings,
a second category selecting step (S25) of selecting at least one of said plurality of categories on the basis of said one or more first character strings, and
a step (S26) of selecting at least one electronic community from among the one or more electronic communities assigned to the category selected in said second category selecting step.

27. The computer-readable recording medium encoded with the content collecting program according to any one of claims 21 to 24, wherein
each of said plurality of electronic communities is assigned to one or more of a plurality of categories, and
said community selecting step (S05-S07, S44) includes
a second dividing step (S61) of dividing said answer content into one or more second character strings,
a third category selecting step (S62) of selecting at least one of said plurality of categories on the basis of said one or more second character strings, and
a step (S63) of selecting at least one electronic community from among the one or more electronic communities assigned to the category selected in said third category selecting step.

28. The computer-readable recording medium encoded with the content collecting program according to any one of claims 21 to 24, wherein said posting step (S08, S45) includes a step (S45) of, in the case where said second electronic community is selected in said selecting step, posting at least one of answer contents which have been posted on said first electronic community, together with said question content, on said second electronic community.

29. The computer-readable recording medium encoded with the content collecting program according to any one of claims 21 to 24, further comprising an adding step (65) of adding a new electronic community to said plurality of electronic communities.

30. The computer-readable recording medium encoded with the content collecting program according to any one of claims 21 to 24, wherein said content collecting apparatus further includes a Web server function.
